# EUROPEAN PATENT SPECIFICATION

(11) **EP 0 465 269 B1**
(45) Date of publication and mention of the grant of the patent: **02.10.1996**
(21) Application number: 91306149.5
(22) Date of filing: 05.07.1991
(51) Int. Cl.: G11B 7/24, G11B 7/26, G11B 5/72, G11B 11/10

(54) **Magneto-optical disk and manufacturing method thereof**
Magnetooptische Platte und deren Herstellungsverfahren
Disque magnéto-optique et son procédé de fabrication

(30) Priority: 05.07.1990 JP 178735/90; 05.07.1990 JP 178794/90
(43) Date of publication of application: 08.01.1992
(73) Proprietor: SHARP KABUSHIKI KAISHA, Osaka 545 (JP)
(72) Inventor: Nakayama, Junichiro, Shiki-gun, Nara-ken (JP); Katayama, Hiroyuki, Nara-shi, Nara-ken (JP); Ohta, Kenji, Kitakatsuragi-gun, Nara-ken (JP)
(74) Representative: Brown, Kenneth Richard

(56) References cited:
- EP-A- 0 304 873
- EP-A- 0 438 315
- US-A- 3 778 308
- PATENT ABSTRACTS OF JAPAN vol. 8, no. 24 (C-208)(1461) 2 February 1984 & JP-A- 58 187 441
- PATENT ABSTRACTS OF JAPAN vol. 11, no. 15 (P-536)(2462) 16 January 1987 & JP- A-61 190 719
- PATENT ABSTRACTS OF JAPAN vol. 6, no. 258 (P-163)(1136) 17 December 1982 & JP- A-57 154 650
- PATENT ABSTRACTS OF JAPAN vol. 9, no. 262 (P-398)(1985) 19 October 1985 & JP- A-60 111 337

## Description

### FIELD OF THE INVENTION

The present invention relates to a magneto-optical disk and a manufacturing method thereof, the magneto-optical disk being employed in a magneto-optical recording/reproducing device which performs recording and reproduction using a flying-type magnetic head.

### BACKGROUND OF THE INVENTION

In a conventional magneto-optical recording method, a substrate made of glass, plastic, ceramic or other material, having a vertically magnetized film composed of metal magnetic material coated thereon, serves as a recording medium. Recording and reproducing operations on and from the recording medium are carried out as described hereinbelow.

In the recording operation, first of all initialization is performed by arranging a magnetization direction of the recording medium to a predetermined direction (upward direction or downward direction) according to a strong external magnetic field. Then, a temperature of a recording portion where the recording is to be carried out is raised to a point above or to a vicinity of the Curie temperature, or above a vicinity of the magnetic compensation temperature, by projecting a laser beam thereon. As a result, a magnetic coercive force at the recording portion becomes zero or substantially zero. The magnetization direction is then reversed by applying an external magnetic field (bias magnetic field) which has a reverse direction with respect to the magnetization direction of the initialized recording medium.

After that, the projection of the laser beam is stopped and the temperature of the recording portion of the recording medium returns to room temperature. A reversed magnetization is thus fixed and information is recorded thermomagnetically.

In the reproducing operation, a linearly polarized laser beam is projected onto the recording medium. A polarization plane of reflected light or transmitted light from or through the recording medium rotates in a direction that varies according to a magnetization direction of the recording portion (magnetic Kerr effect or magnetic Faraday effect). Information is thereby optically read out according to differences in the direction of rotation of the polarization plane.

Recording media used in the magneto-optical recording method described above are attracting attention as large capacity memory elements of a re-writable type. There are two methods for re-writing over information recorded on the recording medium, described in (i) and (ii) hereinbelow.
(i) A method whereby a deletion of previously recorded information is performed by initializing the recording medium once again.
(ii) A method whereby a recording medium or a magnetic head for generating an external magnetic field is improved so that overwriting, i.e., direct re-writing of information without performing the deletion, may be carried out.

If the method (i) is adopted, either an initialization device must be installed apart from a recording magnetic head or two magnetic heads must be installed, one for recording and another for erasing. This increases the number of parts and causes a rise in cost. Moreover, when only one head is provided and the deletion is performed according to the method (i), the re-writing operation is inefficient because the deletion operation requires the same amount of time as the recording operation.

On the other hand, if the method (ii) is adopted and an improvement in the recording medium is carried out, it is generally accompanied by difficulties in controlling film composition, film thickness and so on. For this reason, the most effective method in (ii) is regarded as improving the magnetic head which generates the external magnetic field, i.e., recording information by switching a direction of the external magnetic field at high speed while keeping an intensity of the laser beam constant.

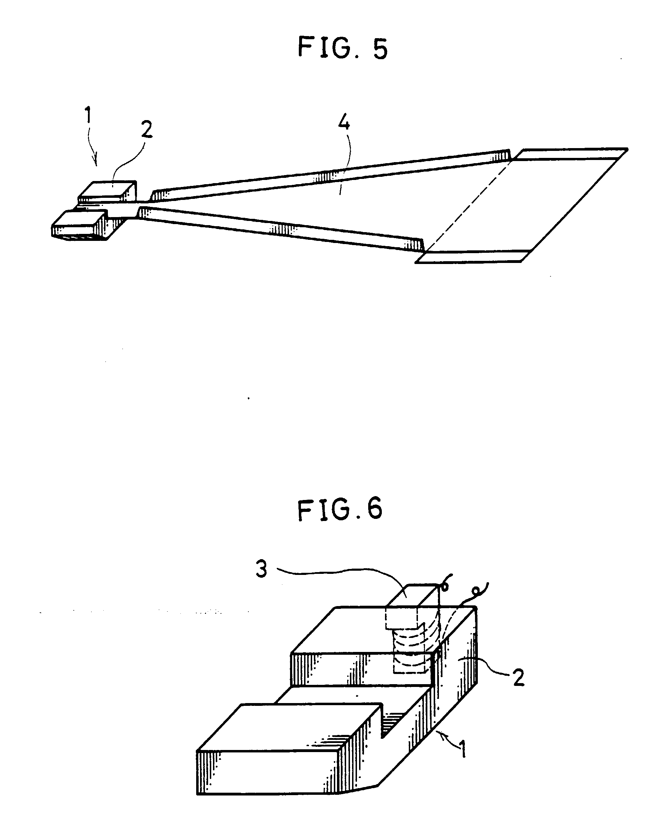

In order to reverse the direction of the external magnetic field at high speed it is necessary to make a coil and a coil core of the magnetic head, which generates the external magnetic field, extremely small. However, a generating area of the magnetic field becomes smaller as the coil and the coil core are made smaller. In order to counteract this, the magnetic head and the recording medium must be brought closer to each other. Thus, as shown in Figs. 5 and 6, generally a flying-type magnetic head 1 comprising a slider 2 is adopted as the magnetic head for generating the external magnetic field. The slider 2 is capable of sliding over a recording medium (not shown). In the flying-type magnetic head 1, a magnetic head section 3 is provided on the slider 2. The slider 2 is suspended from a suspension 4 and a depressing force is thereby exerted downwards on the slider 2 in a vertical direction with respect to a surface of the recording medium. When the recording medium is rotated, the suspension 4 supports the slider 2 as it begins to float above the surface of the recording medium. The slider 2 begins to float above the surface of the recording medium because of a floating force exerted upwards on the slider 2 by an air flow which begins between the slider 2 and the recording medium.

When the rotating recording medium attains a steady state velocity, a constant floating gap develops between the flying-type magnetic head 1 and the recording medium due to the fact that the floating force balances with the depressing force. The flying-type magnetic head of this type is used in conventional hard-disk devices as well. In the case of hard-disk devices the floating gap of the flying-type magnetic head is of a submicron order.

However, when the recording medium is a magneto-optical disk, a floating gap of 5µm-15µm, larger than in the case of a fixed-type hard disk, becomes necessary. This is because magneto-optical disks are transportable and the likelihood of dirt etc. sticking on the surface consequently increases, resulting in head crash and so on if the flying-type magnetic head 1 approaches too close to the magneto-optical disk.

It is preferable to apply a lubricant on the surface of the magneto-optical disk which is opposite to the flying-type magnetic head 1 as this facilitates a smooth sliding of the slider 2 on the magneto-optical disk. Conventionally, oil belonging to the fluorocarbon family, such as perfluoropolyether, is used as the lubricant. The lubricant is applied to the entire surface of the magneto-optical disk by a method such as the spin-coat method or the spray method.

However, since the oil belonging to the fluorocarbon family is a liquid, problems occur such as the slider 2 sticking to the surface of the magneto-optical disk or the lubricant scattering when the magneto-optical disk is rotated.

To overcome these problems, solid lubricants such as MoS₂, WS₂ or polytetrafluoroethylene may be used. However, it is difficult to form a solid-lubricant layer of uniform micron-order thickness. Non-uniform thickness results in the air flow between the slider 2 and the rotating recording medium being disturbed which in turn causes the floating gap of the flying-type magnetic head 1 to vary. Consequently, problems occur such as non-uniform application of the external magnetic field on a vertically magnetized film in the recording medium.

### SUMMARY OF THE INVENTION

An object of the present invention is to provide a magneto-optical disk suitable in a case where a flying-type magnetic head is used for recording and/or reproduction.

In one aspect the present invention provides a magneto-optical disk comprising a substrate, a recording layer formed on the substrate, and a solid-lubricant film, whereon a flying-type magnetic head for recording and/or reproducing may slide, formed over the recording layer, wherein the solid-lubricant film is composed of a material comprising polyolefin containing perfluoroalkyl group.

In another aspect the present invention provides the manufacturing method, for such a magneto-optical disk, defined by claim 8.

According to the invention, problems such as sticking of a flying-type magnetic head to the magneto-optical disk or scattering of the lubricant do not occur so easily. Additionally, a solid-lubricant film which is substantially uniform in thickness can be realized, thereby ensuring that an external magnetic field of substantially constant intensity can be applied by a flying-type magnetic head to the recording layer of the magneto-optical disk.

### BRIEF DESCRIPTION OF THE DRAWINGS

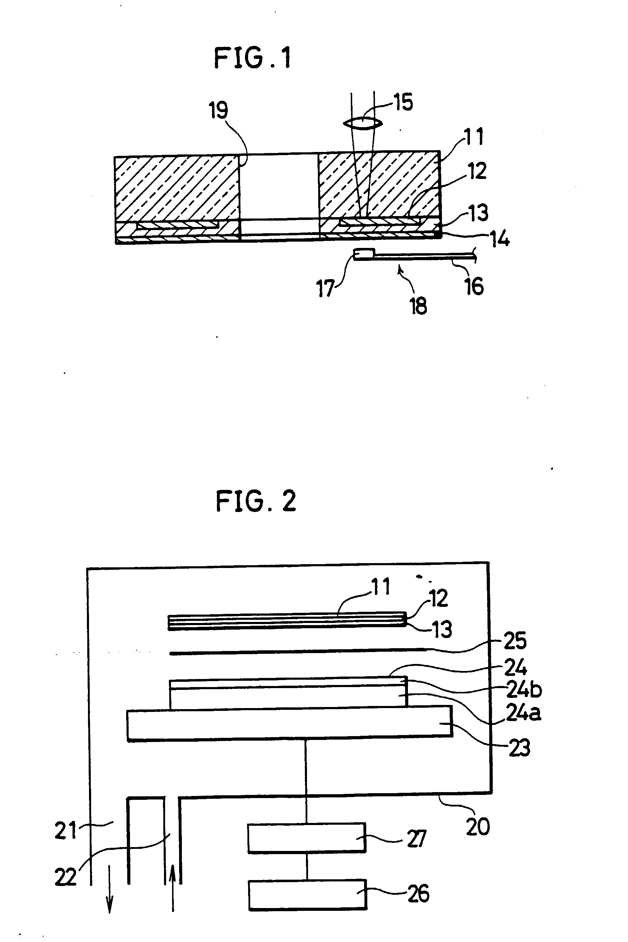

Figs. 1 and 2 relate to a first embodiment of the present invention.

Fig. 1 is a view schematically showing a diametrical sectional view of a magneto-optical disk.

Fig. 2 is an explanatory view schematically showing a sputtering system.

Figs. 3 and 4 relate to a second embodiment of the present invention.

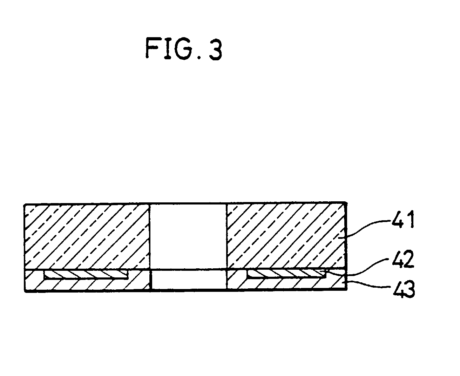

Fig. 3 is a view schematically showing a diametrical sectional view of a magneto-optical disk.

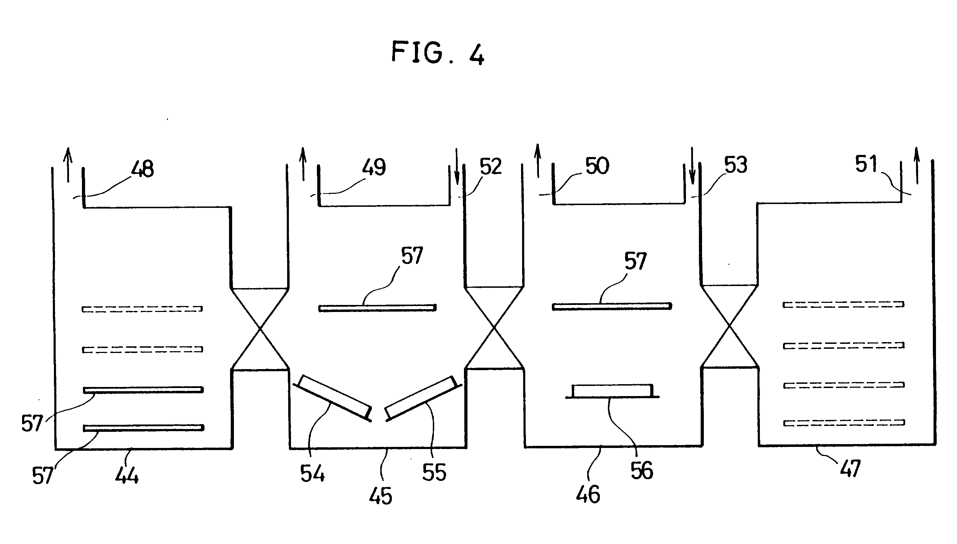

Fig. 4 is an explanatory view schematically showing an in-line sputtering system.

Fig. 5 and 6 show conventional examples.

Fig. 5 is a perspective view showing a flying-type magnetic head.

Fig. 6 is a partially enlarged view of the slider shown in Fig. 5.

### DESCRIPTION OF THE EMBODIMENTS

A first embodiment of the present invention is described hereinbelow, referring to the Figs. 1 and 2.

As shown in Fig. 1, a magneto-optical disk of the first embodiment of the present invention essentially comprises a disc-shaped translucent substrate 11, a recording layer 12 formed on the substrate 11, a protective film 13 formed on the recording layer 12 for protecting the recording layer 12, and a solid-lubricant film 14 formed on the protective film 13.

The substrate 11 may be formed, for example, by injection molding using a translucent resin such as polycarbonate. A hole 19 is made in the center of the substrate 11. A spiral guiding groove (not shown in Fig. 1) is provided on a surface of the substrate 11 where the recording layer 12 is formed. The guiding groove serves to guide a light beam irradiated thereon. Additionally and as necessary, uneven pits (not shown in Fig. 1) having information such as address information recorded thereon are also provided on the surface of the substrate 11 where the recording layer 12 is formed.

Although not shown in Fig. 1, the recording layer 12 comprises for example a first dielectric film made of AIN (film thickness up to 80nm), a magnetic film made of DyFeCo (film thickness up to 20nm), a second dielectric film made of AlN (film thickness up to 25nm) and a reflecting film made of Al (film thickness up to 50nm). These four layers are deposited in sequence on the substrate 11. The first and second dielectric films are provided in order to increase the Kerr rotation angle and to protect the magnetic film.

An ultraviolet rays-hardening resin belonging to the urethane acrylate family, for example, is used in the protective film 13. The ultraviolet rays-hardening resin is applied on the- recording layer 12 by the spin-coat method and is then hardened by the irradiation of ultraviolet light. Heat-hardening resin may equally be used instead of the ultraviolet rays-hardening resin.

Polyolefin (CₙH₂ₙ) containing the perfluoroalkyl group (CₘF₂ₘ₊₁-) is used in the solid-lubricant film 14. The perfluoroalkyl group is oriented to be on a surface of the solid-lubricant film 14 and the polyolefin is in an inner section of the solid-lubricant film 14. A thickness of the solid-lubricant film 14 is set to be up to 100nm.

A magneto-optical recording/reproducing device, which carries out recording, reproducing or erasing operations on/from the magneto-optical disk, comprises: an objective lens 15; an optical head disposed so as to be opposite to a surface of the substrate 11 whereon the recording layer 12 etc. are not provided; a flying-type magnetic head 18 suspended by a suspension 16 over a side where the solid-lubricant film 14 is provided, the flying-type magnetic head 18 including a slider 17 and a magnetic head (not shown in Fig. 1) which is borne by the slider 17; a spindle motor (not shown in Fig. 1) which rotates the magneto-optical disk; and so on.

With the above arrangement, the slider 17 is stationary and rests on the surface of the solid-lubricant film 14 when the magneto-optical disk is stationary. When the magneto-optical disk is rotated during recording or reproduction, the slider 17 initially slides on the solid-lubricant film 14. Then, when the rotating magneto-optical disk attains a steady state velocity, the slider 17 begins to float above the solid-lubricant film 14 at a substantially constant floating gap. The slider 17 begins to float due to a floating force exerted upwards on the slider 17 by an air flow that begins between the magneto-optical disk and the slider 17. The floating gap remains substantially constant due to the fact that the floating force balances with a depressing force which is exerted downwards on the slider 17 by the suspension 16.

Thereafter, when recording is to be performed, a laser light is converged by the objective lens 15 on the recording layer 12 through the translucent substrate 11. Simultaneously, a magnetic field is applied on the recording layer 12 from the magnetic head borne by the slider 17. The magnetic field reverses in response to information to be recorded. Accordingly, the information is recorded in the recording layer 12.

When information is to be reproduced, linearly polarized laser light is irradiated on the recording layer 12. Then, a direction of rotation of a polarization plane of light reflected by the recording layer 12 is detected by the optical head and the information is thereby reproduced.

When the rotation of the magneto-optical disk is stopped, the air flow between the slider 17 and the magneto-optical disk gradually decreases as the rotation of the magneto-optical disk slows down. This causes the slider 17 to first contact with and slide on the solid-lubricant film 14, and then to come to rest on the solid-lubricant film 14 when the magneto-optical disk stops rotating completely.

Since polyolefin containing the perfluoroalkyl group is used as the solid-lubricant film 14 in the present embodiment, the coefficient of friction between the slider 17 and the solid-lubricant film 14 is less than 1.0. Conventional magneto-optical disks have a coefficient of friction of greater than 1.0 between a surface thereof and a slider. Since the coefficient of friction of the magneto-optical disk of the present embodiment is less than the coefficient of friction of conventional magneto-optical disks, sticking of the slider 17 to the magneto-optical disk does not occur so easily. Moreover, problems such as scattering of the lubricant when the magneto-optical disk is rotated do not occur since the solid-lubricant film 14 is used.

A method for manufacturing the magneto-optical disk is described hereinbelow, referring to Fig. 2.

First, the recording layer 12 is formed on the substrate 11 by the evaporation method, sputter method or other method. The substrate 11 has the guiding groove and the uneven pits provided thereon. Then, the ultraviolet rays-hardening resin is applied over the recording layer 12 by the spin-coat method. The protective film 13 is then formed by irradiating ultraviolet light on the ultravio let rays-hardening resin.

Once the recording layer 12 and the protective film 13 are formed on the substrate 11, the solid-lubricant film 14 is formed thereon by setting the substrate 11 in a vacuum chamber 20 of a sputtering system, as shown in Fig. 2.

A target 24 is placed on a cathode 23 of the sputtering system so as to be opposite to the protective film 13 formed on the substrate 11. The target 24 comprises a base 24a made of Al and a target-material layer 24b which is applied on the base 24a. Polytetrafluoroethylene powder is thoroughly kneaded with perfluoropolyether in a proportion of 1:3 by weight until a greasy state is reached. This is used as the target material layer 24b in the present embodiment. A shutter 25 is disposed between the substrate 11 and the target 24.

Air is evacuated from the vacuum chamber 20 through an air evacuation port 21 until the degree of vacuum of the vacuum chamber 20 falls below 1×10⁻⁵ Torr. Then, Ar gas is introduced into the vacuum chamber 20 through an induction port 22. The degree of vacuum in the vacuum chamber 20 is thereby brought up to and maintained at 1x10⁻³ Torr. Then, voltage is applied between the cathode 23 and the vacuum chamber 20 via a matching circuit 27 from a high-frequency power source 26. The target 24 is thereby sputtered and the solid-lubricant film 14, made of polyolefin containing the perflouroalkyl group, is formed on the protective film 13.

When the solid-lubricant film 14 is formed according to the method described above, substantially uniform thickness of the solid-lubricant film 14 over the entire surface of the magneto-optical disk can be achieved. Accordingly, a magnetic field of substantially constant intensity can be applied to the recording layer 12 by the flying-type magnetic head 18. This is possible because the air flow between the slider 17, provided on the flying-type magnetic head 18, and the rotating magneto-optical disk is not disturbed and, consequently, the floating gap remains substantially constant.

A second embodiment of the present invention is described hereinbelow, referring to Figs. 3 and 4.

As shown in Fig. 3, a magneto-optical disk of the present embodiment comprises a substrate 41 made of glass, a recording layer 42 formed on the substrate 41 and a solid-lubricant film 43 formed on the recording layer 42 so as to cover it. The present embodiment relates to a magneto-optical disk which uses weatherproof materials, such as a multi-layered film as the recording layer 42 wherein a plurality of Pt layers and Co layers are layered alternately. Consequently, the protective film 13 described in the first embodiment is omitted in the present embodiment.

A method for manufacturing the magneto-optical disk is described hereinbelow, referring to Fig. 4.

First, a guiding groove and uneven pits, similar to those described in the previous embodiment, are provided on the glass substrate 41 by, for example, dry etching using CF₄ gas.

Then, using an in-line sputtering system as shown in Fig. 4, the recording layer 42 and the solid-lubricant film 43 are formed on the substrate 41.

The in-line sputtering system comprises a loading chamber 44, a recording-layer forming chamber 45, a solid-lubricant film forming chamber 46 and an unloading chamber 47. A target 54 and a target 55, made respectively from Pt and Co, are disposed in the recording-layer forming chamber 45 in order to form the recording layer 42 comprising the multi-layered film wherein the plurality of Pt layers and Co layers are deposited alternately. A target 56 is disposed in the solid-lubricant film forming chamber 46. The target 56 comprises polytetrafluoroethylene powder thoroughly kneaded with perfluoropolyether in a proportion of 1:3 by weight until a greasy state is reached. Further, air evacuation ports 48-51 are provided respectively in each of the chambers 44-47 in order to create a vacuum in the chambers. Induction ports 52 and 53 are provided respectively in the recording-layer forming chamber 45 and the solid-lubricant film forming chamber 46 in order to introduce Ar gas therein.

First, the substrates 41 (not shown in Fig. 4) are inserted into the loading chamber 44 where they are placed on trays 57. Then, the substrates 41 on the trays 57 are transported to the recording-layer forming chamber 45 by a conveyor belt (not shown in Fig. 4). In the recording-layer forming chamber 45, the target 54 made from Pt and the target 55 made from Co are alternately sputtered on the substrate 41. The recording layer 42 comprising the multi-layered Pt and Co film is thereby formed on each of the substrates 41. Specifically, film thickness of each of the Pt layers is up to 0.8nm and film thickness of each of the Co layers is up to 0.3nm; 30 layers respectively of Pt and Co are alternately deposited. Finally, a Pt layer is deposited as a top-most layer.

Then, the substrates 41 having the recording layer 42 formed thereon are transported to the solid-lubricant film forming chamber 46. In the solid-lubricant film forming chamber 46, the solid-lubricant film 43 is formed on the recording layer 42 by sputtering the target 56. The solid-lubricant film 43 is made of polyolefin containing the perfluoroalkyl group. Thereafter, the magneto-optical disks which have the solid-lubricant film 43 formed thereon are taken out through the unloading chamber 47.

For the sake of simplicity, the high-frequency power sources etc. in the recording-layer forming chamber 45 and the solid-lubricant film forming chamber 46 have not been shown in Fig. 4. Further, the recording layer 42 comprising the Pt layers and the Co layers has been described as being formed in the recording-layer forming chamber 45 by sputtering, but may equally be formed by evaporation.

In the present embodiment, the coefficient of friction between the solid-lubricant film 43 and the slider 17 (see Fig. 1) is less than 1.0.

Further, since the recording layer 42 and the solid-lubricant film 43 are formed using the in-line sputtering system, the magneto-optical disk can be manufactured efficiently.

## Claims

1. A magneto-optical disk comprising a substrate (11;41), a recording layer (12;42) formed on the substrate, and a solid lubricant film (14;43), whereon a flying-type magnetic head for recording and/or reproducing may slide, formed over the recording layer, wherein the solid-lubricant film (14;43) is composed of a material comprising polyolefin containing perfluoroalkyl group.

2. A magneto-optical disk according to claim 1, wherein the solid-lubricant film (43) is formed directly on the recording layer (42).

3. A magneto-optical disk according to claim 2, wherein the recording layer (42) is made of a multi-layered film comprising alternately deposited Pt and Co layers.

4. A magneto-optical disk according to claim 1, wherein a protective film (13) for protecting the recording layer (12) is provided between the recording layer and the solid-lubricant film (14).

5. A magneto-optical disk according to claim 4, wherein the protective film (13) is made of a resin belonging to a group consisting of ultraviolet light-hardening resin or heat-hardening resin.

6. A magneto-optical disk according to claim 1, 4 or 5, wherein the recording layer (12) is made of a first dielectric film, a magnetic film, a second dielectric film and a reflecting film.

7. A magneto-optical disk according to claim 1, 4, 5 or 6, wherein said perfluoroalkyl group is oriented to be on the surface of the solid-lubricant film (14).

8. A method of manufacturing the magneto-optical disk defined by claim 1, the method comprising forming said recording layer (12) on said substrate (11), and forming said solid-lubricant film (14) from polyolefin containing perfluoroalkyl group by sputtering target material (24b) with argon ions, the target material (24b) being achieved by kneading polytetrafluoroethylene powder with perfluoropolyether.

## Patentansprüche

1. Magnetooptische Platte mit einem Substrat (11; 41), einer auf dem Substrat hergestellten Aufzeichnungsschicht (12; 42) und einem Film (14;43) aus festem Schmiermittel, auf dem ein schwebender Magnetkopf für Aufzeichnungs- und/oder Abspielvorgänge gleiten kann, und der auf der Aufzeichnungsschicht hergestellt ist, wobei der Film (14; 43) aus festem Schmiermittel aus einem Material besteht, das ein die Perfluoralkylgruppe enthaltendes Polyolefin enthält.

2. Magnetooptische Platte nach Anspruch 1, bei der der Film (43) aus festem Schmiermittel direkt auf der Aufzeichnungsschicht (42) hergestellt ist.

3. Magnetooptische Platte nach Anspruch 2, bei der die Aufzeichnungsschicht (42) aus einem mehrschichtigen Film besteht, der abwechselnd abgeschiedene Pt- und Co-Schichten aufweist.

4. Magnetooptische Platte nach Anspruch 1, bei der ein Schutzfilm (13) zum Schützen der Aufzeichnungsschicht (12) zwischen der Aufzeichnungsschicht und dem Film (14) aus festem Schmiermittel vorhanden ist.

5. Magnetooptische Platte nach Anspruch 4, bei der der Schutzfilm (13) aus einem Harz, das zu einer aus durch Ultraviolettlicht härtbaren Harzen bestehenden Gruppe gehört, oder aus einem durch Wärme härtbaren Harz besteht.

6. Magnetooptische Platte nach einem der Ansprüche 1, 4 oder 5, bei der die Aufzeichnungsschicht (12) aus einem ersten dielektrischen Film, einem magnetischen Film, einem zweiten dielektrischen Film und einem Reflexionsfilm besteht.

7. Magnetooptische Platte nach einem der Ansprüche 1, 4, 5 oder 6, bei der die Perfluoralkylgruppe so ausgerichtet ist, daß sie an der Oberfläche des Films (14) aus festem Schmiermittel liegt.

8. Verfahren zum Herstellen der durch Anspruch 1 definierten magnetooptischen Platte, das folgendes umfaßt: Herstellen der Aufzeichnungsschicht (12) auf dem Substrat (11) und Herstellen des Films (14) aus festem Schmiermittel aus einem die Perfluoralkylgruppe enthaltenden Polyolefin durch Sputtern von Targetmaterial (24b) mit Argonionen, wobei das Targetmaterial (24b) dadurch erhalten wird, daß Polytetrafluorethylen-Pulver mit Perfluorpolyether geknetet wird.

## Revendications

1. Disque magnéto-optique comprenant un substrat (11; 41), une couche d'enregistrement (12; 42) formée sur le substrat, et un film de lubrifiant solide (14; 43), sur lequel une tête magnétique de type sans contact peut glisser afin d'effectuer un enregistrement et/ou une reproduction, formé sur la couche d'enregistrement, dans lequel le film de lubrifiant solide (14; 43) est composé d'un matériau comprenant une polyoléfine contenant un groupe perfluoroalkyle.

2. Disque magnéto-optique selon la revendication 1, dans lequel le film de lubrifiant solide (43) est formé directement sur la couche d'enregistrement (42).

3. Disque magnéto-optique selon la revendication 2, dans lequel la couche d'enregistrement (42) est réalisée avec un film à plusieurs couches comprenant des couches de Pt et de Co déposées de manière alternée.

4. Disque magnéto-optique selon la revendication 1, dans lequel un film protecteur (13) destiné à protéger la couche d'enregistrement (12) est prévu entre la couche d'enregistrement et le film de lubrifiant solide (14).

5. Disque magnéto-optique selon la revendication 4, dans lequel le film protecteur (13) est réalisé avec une résine appartenant à un groupe comprenant une résine durcissant à la lumière ultraviolette ou une résine durcissant à la chaleur.

6. Disque magnéto-optique selon la revendication 1, 4 ou 5, dans lequel la couche d'enregistrement (12) est réalisée avec un premier film diélectrique, un film magnétique, un second film diélectrique et un film réflecteur.

7. Disque magnéto-optique selon la revendication 1, 4, 5 ou 6, dans lequel ledit groupe d'alcoyles perfluoriques est orienté afin d'être disposé sur la surface du film de lubrifiant solide (14).

8. Procédé pour fabriquer le disque magnéto-optique selon la revendication 1, le procédé comprenant la formation de ladite couche d'enregistrement (12) sur ledit substrat (11), et la formation dudit film de lubrifiant solide (14) à partir d'une polyoléfine contenant un groupe perfluoroalkyle par pulvérisation cathodique d'un matériau cible (24b) avec des ions d'argon, le matériau cible (24b) étant obtenu en malaxant une poudre de polytétrafluoroéthylène avec un polyéther perfluoropolyéther.
